# EUROPEAN PATENT SPECIFICATION

(11) **EP 0 455 144 B1**
(45) Date of publication and mention of the grant of the patent: **15.02.1995**
(21) Application number: 91106707.2
(22) Date of filing: 25.04.1991
(51) Int. Cl.: G02F 1/21, H04B 10/10

(54) **An optical polarization modulator employing interferometric structures**
Optischer Polarisationsmodulator mit interferometrischen Strukturen
Modulateur de polarisation optique utilisant des structures interférométriques

(30) Priority: 27.04.1990 IT 6731390
(43) Date of publication of application: 06.11.1991
(73) Proprietor: CSELT Centro Studi e Laboratori Telecomunicazioni S.p.A., I-10148 Turin (IT)
(72) Inventor: Bradley, Piero John, Torino (IT); Calvani, Riccardo, Pino Torinese (TO) (IT); Costa, Bruno, Torino (IT)
(74) Representative: Riederer Freiherr von Paar zu Schönau, Anton

(56) References cited:
- EP-A- 0 277 427
- EP-A- 0 394 605

## Description

The present invention relates to optical communications or measurement systems employing polarization modulated signals, and more particularly to a modulator of the polarization of an optical carrier, using interferometric structures.

Polarization modulation of an optical signal is a technique originally developed to enhance sensitivity in signal detection in ellipsometry and optical fibre sensors, and it has been afterwards applied in digital optical communications systems. In the first mentioned application, modulation results in differently polarized signals which are sent into a body under test: from the modifications undergone by the state of polarization of such signals because of the interaction with the body, information is obtained on certain optical characteristics of the body, e. g. birefringence state, or on the variations of such characteristics due to an external cause (temperature, forces and the like).

In optical communications, polarization modulation is generally used in two ways:
- as an actual modulation technique, by associating a different state of polarization with the different levels of a digital information signal;
- as an additional modulation of a carrier which has already been otherwise modulated by the information signals, by varying in discrete or continuous manner the state of polarization of the carrier within each bit interval (polarization diversity transmission); the latter application aims to make receivers in coherent communication systems insensitive to random variations in the state of polarization of the fibre used as a transmission medium, which variations highly degrade the performance of the receivers themselves.

When performing a polarization modulation, whatever the application, it is desirable that any state of polarization can be obtained in the modulated signal for a given state of polarization of the signal to be modulated, characterized by a certain ratio between the amplitudes Ex, Ey of the components of the electromagnetic field and by a certain relative phase between such components. Furthermore, by taking into account the high transmission rates generally used in optical communication systems, the need for high speed (or wide band) modulators is evident. A controlled rapid variation of the state of polarization is also desirable in measurement and sensing. In such cases, a known variation of the incoming state of polarization allows evaluating by an appropriate detection stage the birefringence of a sample under test or the birefringence variations in a fibre induced by pressure or temperature variations.

An example of high speed modulator which employs a commercially available optical component is described in the paper entitled "High speed polarization modulation through an optical guided-wave two-by-two switch" presented by R.Calvani,R.Caponi,G.Marone and P.Poggiolini at the Conference OE /FIBER'89, Boston (Mass., USA), 6 - 9 September 1989. This modulator allows operating with bandwidths of several GHz. A variant of the same device, described in European Patent Application No. 90 100 329.3 (= EP-A-0 394 605) in the name of the same Applicant, allows whatever state of polarization to be obtained at the modulator output.

Another polarization modulator, according to the preambles of claims 1 and 15, is known from EP-A-0 277 427.

Greater bandwidths can be required chiefly for use in polarization scrambling, where the state of polarization is caused to vary at a frequency multiple of the bit rate. Polarization modulators meeting those requirements are not known in the art, and the invention aims to supply a modulator which is of simple structure, allows any state of polarization of the modulated signals to be achieved starting from a given state of the signal to be modulated, and also allows high polarization modulation speeds (at least of the order of ten GHz) to be achieved.

The invention refers to an optical signal polarization modulator, comprising a source of a light radiation which is the signal to be modulated, means for sharing said radiation between the two branches of an interferometer, and means for recombining the fractions of said radiation which have gone along the two branches of the interferometer and for emitting the modulated signal, wherein at least one of the two branches comprises means for amplitude modulating the radiation fraction which goes along it, so that the ratio between the amplitudes of said fractions can have whatever value depending on the value of a control signal which can have a plurality of different values and which is emitted by a control signal generator, and for giving a desired relative length to the optical paths in said two branches, and polarization means to impose a first and a second state of polarization to the radiation fractions arriving at the recombining means.

The amplitude modulating means either includes a modulator located in a single branch and made of devices which, depending on the intensity of the radiation fraction sent along said branch, transmit said fraction towards the recombining means or reflect it towards the second branch, (In this case the control signals perform an amplitude modulation of the signal to be polarization modulated), or,
as an alternative, the means for amplitude modulating the radiation fractions sent along the two branches comprise an amplitude modulator in each interferometer branch, and the control signals cause a variation of the modulator transmittivity or reflectivity. Preferably, in that case, the amplitude modulators are made of multiple quantum well structures.

In the preferred embodiments, the control signals cause reflectivity variations in the devices used as amplitude modulators, which devices are multiple quantum well structures located in asymmetric Fabry-Perot cavities (i.e. cavities with input and output mirrors of different reflectivity). In those preferred embodiments, the radiation forming the optical signal to be modulated is shared between the two branches of a Michelson interferometer and an output signal is generated by recombining radiations reflected by reflecting bodies placed at the end of said branches, and the polarization modulator comprises:
- two electro-optic amplitude modulators, including multiple quantum well structures located in respective asymmetric resonant cavities, which modulators form said reflecting bodies, receive the radiation fraction which has gone along the respective interferometer branch and are biased by a voltage which can assume a plurality of different values each giving rise to a different reflectivity value in said amplitude modulators;
- first optical polarization means in one of the two branches of the interferometer to cause the light radiation to arrive at the amplitude modulator in such a branch with such a polarization as to impose a first linear state of polarization to a radiation which has been reflected by the modulator and has passed through said first optical polarization means;
- second optical polarization means in the other branch of the interferometer to cause the light radiation to arrive at the amplitude modulator in such a branch with a polarization such as to impose a second linear state of polarization to a radiation which has been reflected by the amplitude modulator and has passed through said second optical polarization means;
- a generator of electrical control signals for said modulators, which is arranged to generate signals which present a plurality of logic levels and is connected to said modulators so that they, in correspondence with different logic levels of the respective control signal, are biased by voltages such that the output signal presents components of different amplitudes with said first and second state of polarization respectively. The invention also includes a polarization diversity optical communications system, wherein a modulator according to the invention originates the desired variations in the state of polarization of a carrier modulated by the information signal, during each bit interval of such a signal.

The invention further comprises a polarization modulation optical communications system, wherein the modulation of the state of polarization of the carrier by the information signal is obtained by a polarization modulator according to the invention.

Still further, the invention includes a measurement system wherein a polarization modulated signal is sent into a body under test and wherein the modulation of the state of polarization of said signal is obtained by a polarization modulator according to the invention.

The invention will become more apparent with reference to the annexed drawings, wherein:
- Figs. 1 to 3 are schemes of possible configurations of a polarization modulator according to the invention;
- Fig. 4 is a scheme of a preferred embodiment of the invention;
- Fig. 5 shows theoretical reflectivity curves of quantum well cavities used in the modulator shown in Fig. 4;
- Fig. 6 shows examples of bias voltages for the cavities;
- Fig. 7 shows an example of relation between states of polarization and reflectivity and bias voltages of quantum well cavities in case of a 4-state modulation.

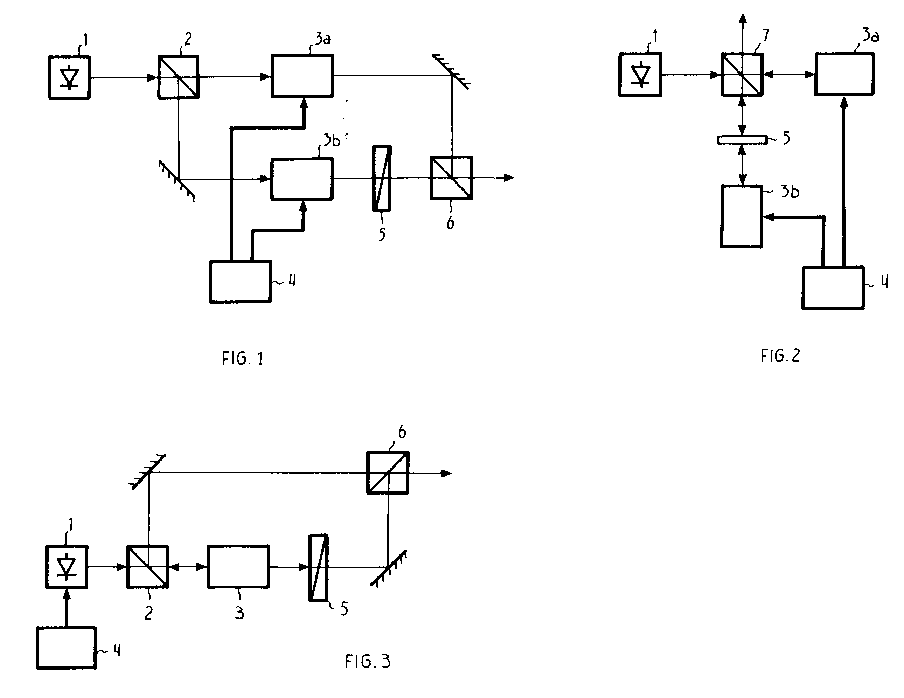

With reference to Figs. 1 and 2, a polarization modulator which allows generation of any state of polarization comprises a source 1 of the optical signal to be modulated, e.g. a linearly polarized signal, sending such a signal to a beam-splitter 2 through suitable optical systems, not shown in the Figures because they are not of interest for the invention understanding. Beam splitter 2 shares the optical power associated with the signal to be modulated between two different paths, each comprising devices, schematized by blocks 3a, 3b, apt to vary the amplitude and the phase of the signal to be modulated depending on a control signal supplied by a generator 4. Means for giving orthogonal polarizations to the signals outgoing from the two devices are provided on the path of said signals. By way of example, a polarizer 5 is shown on the path of the signal emerging from device 3b. A recombining device 6 supplies the polarization modulated signal. The above means generally are provided only in one branch. Only in case that device 6 is a polarizing beam-splitter requiring a horizontal polarization in transmission and a vertical polarization in reflection (or vice-versa), it could be necessary to have the means on both branches in order to generate just those polarizations.

Generally, as far as amplitude modulation is concerned, devices 3a, 3b comprise amplitude modulators apt to operate on two orthogonal states and to cause the ratio between the amplitudes of the two signals arriving at the recombining device to have whatever value. As to the phase variation, devices 3a, 3b will be apt to vary the relative length of the optical paths of the signals along the two branches, so that the signals arriving at the recombining device may have whatever relative phase.

Devices 3a, 3b can operate either in transmission or in reflection: in the first case the modulator will be a Mach-Zehnder interferometer (Fig. 1) and in the second case a Michelson interferometer (Fig. 2); in the latter case a single device 7 will act as splitting and recombining device.

The characteristics of the signal to be modulated and of the control signal depend on the invention applications. More particularly, source 1 will consist of means for generating an optical signal which has already been angularly modulated by a digital information signal, if the modulator is applied in a polarization diversity transmission system; otherwise it will be e.g. a simple semiconductor laser. Generator 4 will be as a rule a generator of square waves at the desired frequency, if the invention is used in a measurement system or for polarization diversity transmission; in the latter case the frequency will generally be a multiple of the bit rate of the information signal. If, on the contrary, the invention is employed for polarization modulation transmission, the generator will be an element supplying the modulating information signal. Preferably, the invention employs multiple quantum well electro-optic modulators as amplitude modulators in devices 3a, 3b, and preferably multiple quantum well modulators acting in reflection. The preferred embodiment is hence the one based on a Michelson interferometer.

In Mach-Zehnder configuration, amplitude modulation could also be performed by using a single optically-controlled active or passive non-linear device, which transmits or reflects the incident radiation depending on the intensity of same. This possibility is schematically represented in Fig. 3, where the non-linear device is denoted by 3. High input signal intensity produces a variation of the non-linear refractive index which enhances transmission, whilst a low intensity signal is reflected and sent into the other branch of the interferometer through splitter 2. In this solution generator 4 is to amplitude modulate the signal emitted from source 1, and the wavelength of the signal to be modulated must be very close to a resonance frequency of the Fabry-Perot cavity forming the non-linear device. If required, steps can be taken to render the transmitted and reflected output amplitudes basically equal, to avoid dichroism effects in the polarization modulated signal.

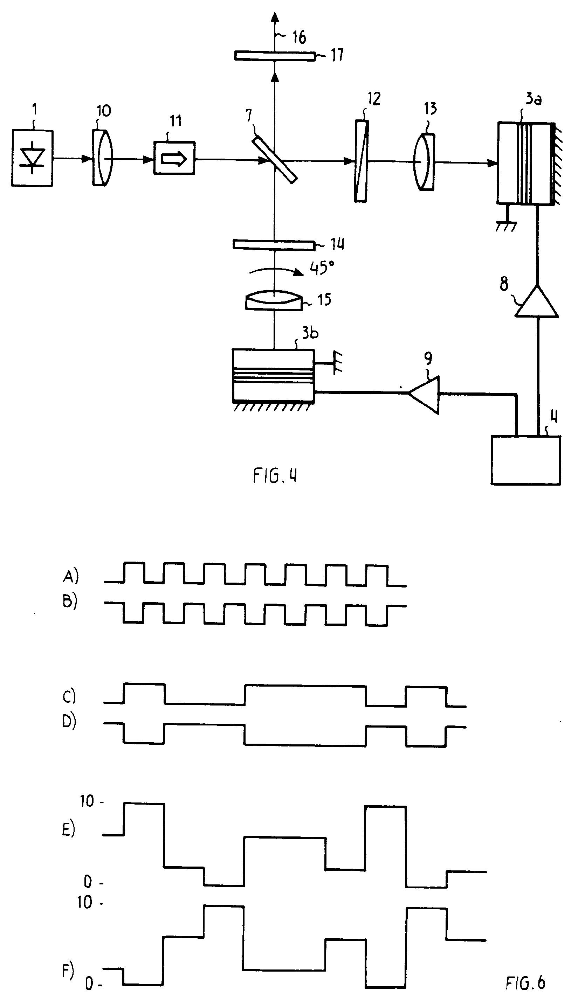

Some examples of the most preferred embodiment of the invention will be now described with reference to Figs. 4 to 7.

In said embodiment, devices 3a, 3b comprise, as mentioned, multiple quantum well electro-optic amplitude modulators. As known, a multiple quantum well structure is a semiconductor structure, made of materials such as GaAs, AlGaAs, lnGaAs, lnP and the like, comprising a number of layers of a first semiconductor with limited band gap width alternated with layers of a second semiconductor with wider band gap. The first semiconductor layers are the so-called "wells" and the second semiconductor layers are the so called "barriers". If the well thickness is comparable with de Broglie wavelength, a set of discrete (quantized) levels in the valence band and a set of discrete levels in the conduction band are present in the wells. The quasi-bidimensional geometry of wells separated by barriers strengthens the coupling between holes and electrons which produces particles (excitons), of which the optical absorption is maximum close to the band gap. If a light radiation is sent e.g. normally to the layers, electron transitions from the valence band levels to the conduction band levels take place by absorption of photons with energy corresponding to the energy difference between the levels.

This structure can operate as an electro-optical modulator when immersed in an electric field perpendicular to the layers, by exploiting the so-called "Stark effect". In fact, by applying an electrical field transversal to the wells, energy levels in valence and conduction bands vary, and consequently also light absorption characteristics vary in function of the bias voltage: more particularly, depending on the device structure, the absorption curve shifts towards the blue or the red. It is hence possible, by varying the applied voltage, to change the intensity of the radiation emerging from the device. More particularly, the voltage will change in function of the logic level of the bits of a digital information signal. To obtain significant absorption changes without resorting to very high voltages, multiple quantum wells can be located inside the cavity of a symmetrical Fabry-Perot interferometer, as described by A. Tomita, Y. Kohga and A. Suzuki in the paper entitled "5:1 ON-OFF contrast in lnGaAs/lnP multiple quantum well Fabry-Perot étalon modulator", Applied Physics Letters, Vol. 55, No. 18, 30 October 1989.

Obviously, absorption characteristics depend on the device reflectivity characteristics, and hence reflectivity variations in function of the applied voltage can be exploited for the modulation. In this case, particularly good results can be obtained by locating the multiple quantum wells inside an asymmetric Fabry-Perot cavity, i.e. a cavity wherein the back mirror has a much higher reflectivity than the front mirror (namely 95% and 30% respectively), as described e.g. in the papers "High contrast reflection modulation at normal incidence in asymmetric quantum well Fabry-Perot structure" by M. Whitehead and G. Parry, Electronics Letters, Vol. 25, No. 9, 27 April 1989, pages 566-568, and "Low-voltage multiple quantum well reflection modulator with ON:OFF ratio > 100:1" by M. Whitehead et al., ibid., Vol. 25, No. 15, 20 July 1989.

The embodiment of the invention described in Figs. 4 to 7 exploits a modulator of this type. In those Figures, the elements already described with reference to Fig. 2 are denoted by the same reference numerals. Asymmetric multiple quantum well Fabry-Perot cavity devices 3a, 3b form the reflecting elements of the two branches of the Michelson interferometer. Considering by way of example a binary modulation, the two devices are polarized in complementary way by a voltage, supplied by generator 4, which can assume two values, namely about 10 volts or 0 volts. For sake of simplicity the first value will be considered exactly 10 V. Device 3a is supplied e.g. with the signal emitted by generator 4, while device 3b is supplied with the complementary signal. Amplifiers 8, 9 bring the emitted signal from generator 4 to the value necessary to device 3a,3b operation. According to whether the voltage applied is 10 Volts or 0 V, the devices are under maximum absorption or maximum reflection conditions.

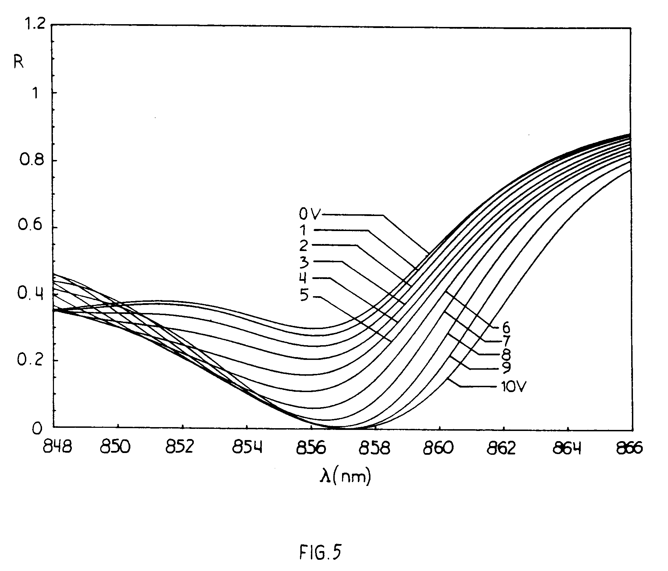

Fig. 5 shows theoretical reflectivity curves of one of such devices in function of the wavelength of an incident radiation and of the voltage applied.

Source 1 sends a linearly-polarized radiation, e.g. in TE mode, towards devices 3a,3b through an optical system 10, an isolator 11 and beam splitter 7 sharing the incident radiation between the two branches of the Michelson interferometer and causing such radiation to arrive at the two devices normally to the layers forming them. The source wavelength will be chosen so that quantum well devices 3a,3b can operate at a wavelength where maximum and minimum reflectivity levels are well spaced (e. g. in the interval 856 - 857 nm, in the example of Fig. 5).

The branch of the Michelson interferometer which receives the radiation transmitted through beam splitter 7 comprises a polarizer 12 oriented according to the source polarization and a second optical system 13 focusing the radiation on the front surface of device 3a. The branch receiving the radiation reflected by beam splitter 7 comprises a quarter-wave plate 14 oriented at 45° and an optical system 15 analogous to system 13. The radiations reflected by the two wells are then recombined by beam splitter 7 and sent towards modulator output 16, e. g. towards a transmission line or a sample under test. A half-wave plate 17 allows the polarization reference at the modulator output to be oriented, if desired.

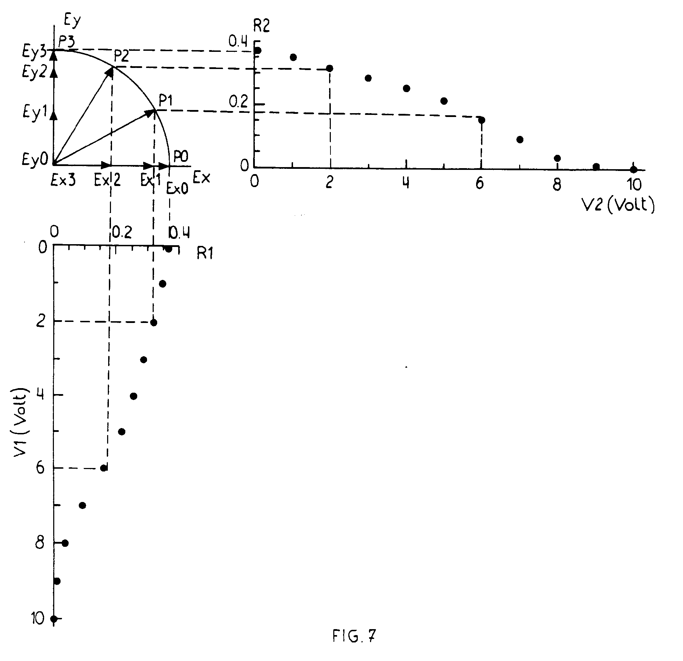

The operation of the modulator will be now described, assuming for sake of simplicity that generator 4 generates a square wave, whose high and low levels are associated with the 10 V and 0 V voltages, respectively. Hence, devices 3a, 3b will receive waveforms A, B of Fig.6, respectively.

That slated, in the transmission branch of the Michelson interferometer, the linearly-polarized radiation arrives at device 3a with the same polarization as at the source output, and it is amplitude modulated by said device depending on the voltage applied thereto. More particularly, as stated, in correspondence with the high level of signal A emitted by generator 4 absorption will be maximum (substantially 100%), whilst in correspondence with the low level device 3a reflects part of the incident radiation (from about 30% to about 40%, according to the structure). The device does not change the linear state of polarization of the radiation, so that the radiation reflected by device 3a when square wave A has voltage 0 will still be linearly polarized in TE mode. The reflected radiation is then collected by beam splitter 7 and reflected towards modulator output 16.

In the reflection branch of the Michelson interferometer, the linearly- polarized radiation coming from the source is converted by plate 14 into a circularly polarized radiation (e.g. with right circular polarization) and arrives at device 3b where it is amplitude modulated by signal B. In correspondence with the low level of such a signal the reflected radiation will have a left circular polarization, owing to specular effect. This reflected radiation passes again through quarter-wave plate 14 and is converted into a radiation vertically polarized in an orthogonal plane to the radiation sent towards device 3b (TM mode polarization). The radiation emerging from plate 14 is then transmitted by beam splitter 7 towards the modulator output 16.

Since devices 3a,3b are biased in complementary way, so that when one reflects the other absorbs and vice versa, an alternance of TE or TM polarized signals will occur at the output of beam splitter 7, according to whether the modulating signal level is high or low. Hence, when the device according to the invention is used in a transmission system of optical signals already angularly modulated or in a measurement system, the desired alternance in the state of polarization is achieved.

The operation is exactly the same when the bias voltage for the devices is obtained from a digital information signal: in that case of course a pattern reproducing the succession of bits 0,1 in the modulating signal will be present at the device output instead of a regular alternance of TE and TM bits. Waveforms C, D in Fig. 6 are examples of bias voltages of devices 3a,3b in this case; it is to be noted that the time scale of signals C, D has no relation with that of signals A, B.

It is also to be taken into account that, since the radiation emitted by source 1 is not rigorously monochromatic, reflectivity of devices 3a, 3b in correspondence with the two values of the bias voltage will vary within a certain range which is the narrower the narrower the source linewidth: this results in a certain amplitude noise in the modulated signal which noise however does not cause problems.

The invention can be also applied when the signal emitted by source 4 is a multilevel signal. In this case, in correspondence with the extreme logic levels of the signal, devices 3a, 3b can be e.g. still biased so that only one of them reflects the incident radiation, thus supplying signals polarized in TE or TM mode. At the intermediate levels reflection will occur at both devices and the modulator output signal will comprise two orthogonally polarized components: hence the intermediate voltage values ought to be such that the relative amplitudes of the two output signal components give the desired state of polarization.

Fig.7 shows how to obtain four equally spaced polarization states P0, P1, P2, P3, the two extreme states P0 and P3 still corresponding to TE and TM polarizations.

In the Figure, Ex0 - Ex3, Ey0 - Ey3 are the amplitudes of the two components of the modulator output signal in correspondence with the various states; R1, R2 and V1, V2 are the reflectivity and the bias voltage of devices 3a, 3b, respectively. As before, states P0, P3 are obtained by biasing device 3a with 0 V and device 3b with 10 V (P0) or vice versa (P3). The two intermediate states P1 ,P2 are on the contrary obtained with a reflectivity of about 0.17 for device 3a and 0.35 for device 3b and vice versa: such values correspond to voltages of the order of 2 V and 6 V, respectively. The bias voltages of devices 3a, 3b are shown at lines E, F in Fig. 6. It can be seen that, in this particular case where the states of polarization are symmetrical with respect to the bisecting line of the quadrant defined by states TE, TM, the voltages applied to devices 3a, 3b are substantially specular. Obviously generator 4 will no longer be a simple generator of binary signals, but it will emit a plurality of voltages depending on the behaviour of the information signal.

The modulator described meets the above-mentioned speed requirements: in fact, transition speed from one reflectivity value to another in devices 3a, 3b depends on the speed at which the absorption spectrum and hence the electric field inside the cavity changes, i.e. on the device capacity: since transition times are of the order of 100 ps, corresponding to frequencies of the order of 10 GHz, the state of polarization at the modulator output can be varied at a frequency basically corresponding to maximum limits permitted by present electronic circuits (in the average, just about ten GHz), thus meeting also the requirements of a polarization diversity transmission at very high speed. In addition any state of polarization can be obtained: in fact, if the two interferometer branches have the same length, it is possible to obtain linear states of polarization with any orientation by duly choosing the voltages to be applied to devices 3a, 3b in correspondence with each logic level of the signal, as shown for the two intermediate states in the example of 4-state polarization modulation. In case of different lengths of the interferometer branches, elliptically polarized modulated signals could be obtained since under those conditions the radiations recombined by beam splitter 7 have a non null relative phase: the various states are characterized by a constant relative phase between the two components and by an amplitude ratio determined as before by the bias voltages of the devices.

If quantum well structures are used in a Mach-Zehnder configuration, the operation is immediately deduced from what described: in correspondence with the two extreme bias voltages, maximum or minimum transmission by the wells will occur, thus performing the desired amplitude modulation. However in a multiple quantum well structure operating in transmission, the transmission minimum is not 0, and hence an output signal will be obtained from both devices 3a, 3b.

It is clear that what described has been given only by way of non limiting example and that variations and modifications are possible without going out of the scope of the invention.

## Claims

1. An optical signal polarization modulator, comprising:
- a source (1) of a light radiation forming the signal to be modulated;
- means (2; 7) for sharing said radiation between the two branches of an interferometer;
- means (3; 3a, 3b) for amplitude modulating the radiation fractions which go along said branches, so that the ratio between the amplitudes of said fractions can have whatever value, depending on the value of a control signal which can have a plurality of different values and is emitted by a control signal generator (4), and optionally for giving a desired relative length to the optical paths in said two branches;
- polarization means (5; 12, 14) for imposing a first and a second state of polarization to the radiation fractions going along said branches, and
- means (6, 7) for recombining said radiation fractions having the first and the second state of polarization, respectively, and for emitting the modulated signal;
characterized in that the means (3a, 3b) for amplitude modulating the radiation fractions sent along the two branches comprise an amplitude modulator in each interferometer branch, and in that the control signal generator (4) is connected to said amplitude modulators and supplies each of them with a control signal which causes the amplitude modulator transmittivity or reflectivity to change.

2. A polarization modulator as claimed in claim 1, characterized in that said amplitude modulators comprise multiple quantum well structures.

3. A polarization modulator as claimed in claim 2, wherein the radiation forming the optical signal to be modulated is shared between the two branches of a Michelson interferometer and a modulated output signal is generated by recombining radiations reflected by reflecting bodies placed at the ends of the two branches, characterized in that the polarization modulator comprises:
- two electro-optic amplitude modulators (3a, 3b), comprising multiple quantum well structures located in respective asymmetric resonant cavities, which amplitude modulators form said reflecting bodies arranged to receive the radiation fraction going along the respective interferometer branch and can be biased by a voltage which can have different values each giving rise to a different reflectivity value in said amplitude modulators (3a, 3b);
- first polarization means (12) in one of the two interferometer branches, to cause the respective radiation fraction to arrive at the amplitude modulator (3a) of such a branch with a polarization such as to impose a first linear state of polarization to a radiation which is reflected by the amplitude modulator (3a) and which has passed through said first optical polarization means (12);
- second polarization means (14) in the other branch of the interferometer, to cause the respective radiation fraction to arrive at the amplitude modulator (3b) of such a branch with a polarization such as to impose a second linear state of polarization to a radiation which is reflected by the amplitude modulator (3b) and which has passed through said second polarization means (14);
- the generator (4) of the electrical control signals for said amplitude modulators (3a, 3b), which is arranged to generate signals presenting a plurality of different logic levels and is connected to said amplitude modulators (3a, 3b) so that the amplitude modulators, in correspondence with the different logic levels of the control signal, are biased by such voltages that the output signal has components of different amplitude with said first and second state of polarization, respectively.

4. A polarization modulator as claimed in claim 3, characterized in that said first state of polarization is imposed to the radiation sent towards the first amplitude modulator (3a) and is maintained in the reflected radiation.

5. A polarization modulator as claimed in claims 3 or 4, characterized in that said control signals are binary signals, of which the two logic levels are associated with a first and a second voltage which cause null and maximum reflectivity, respectively, in the corresponding amplitude modulator (3a, 3b).

6. A polarization modulator as claimed in claims 3 or 4, characterized in that said control signals are multilevel signals, of which the extreme logic levels are associated with a first and a second voltage which cause null or maximum reflectivity, respectively, in the corresponding amplitude modulator (3a, 3b).

7. A polarization modulator as claimed in claims 5 or 6, characterized in that said control signal generator (4) is connected to said amplitude modulators (3a, 3b) in such a way that when said first voltage is applied to one amplitude modulator, the second voltage is applied to the other, so that in correspondence with said two logic levels or said two extreme logic levels of the electrical signal the polarization modulator output signal is formed by the radiation reflected by only one of the two amplitude modulators (3a,3b) and presents the first or the second state of polarization, respectively.

8. A polarization modulator as claimed in claim 2, wherein the radiation forming the optical signal to be modulated is shared between the two branches of a Mach-Zehnder interferometer, characterized in that the polarization modulator comprises:
- two electro-optic amplitude modulators (3a, 3b), comprising multiple quantum well structures located in respective asymmetric resonant cavities, which amplitude modulators are arranged to receive the radiation fraction going along the respective interferometer branch and can be biased by a voltage which can have different values each giving rise to a different transmittivity value in said amplitude modulators (3a, 3b);
- first polarization means (5) in one of the two interferometer branches, to cause the respective radiation fraction to arrive at the recombining means with a first linear state of polarization;
- second polarization means being in the other branch of the interferometer if the recombining means is a polarizing beam-splitter, thereby to cause the respective radiation fraction to arrive at the recombining means with a second linear state of polarization;
- the generator (4) of the electrical control signals for said amplitude modulators (3a, 3b), which is arranged to generate signals presenting a plurality of different logic levels and is connected to said amplitude modulators (3a, 3b) so that the amplitude modulators, in correspondence with the different logic levels of the control signal, are biased by such voltages that the output signal has components of different amplitude with said first and second state of polarization, respectively.

9. A polarization modulator as claimed in claim 8, characterized in that said control signals are binary signals, of which the two logic levels are associated with a first and a second voltage which cause a minimum and a maximum transmittivity, respectively, in the corresponding amplitude modulator (3a, 3b).

10. A polarization modulator as claimed in claim 8, characterized in that said control signals are multilevel signals, of which the extreme logic levels are associated with a first and a second voltage which cause minimum or maximum transmittivity, respectively, in the corresponding amplitude modulator (3a, 3b).

11. A polarization modulator as claimed in any preceding claim, characterized in that said first and second states of polarization are orthogonal.

12. A polarization modulator as claimed in any preceding claim, characterized in that the optical signals sent to the first and second amplitude modulators (3a, 3b) follow equal optical paths, so that the output signals are linearly polarized signals.

13. A polarization modulator as claimed in any one of claims 1 to 11, characterized in that the signals sent to the first and second amplitude modulators(3a, 3b) follow different optical paths, so that the output signals are elliptically polarized signals.

14. A polarization modulator as claimed in any preceding claim, characterized in that it comprises a half-wave plate (14) in the path of the output signal, to orient the polarization thereof.

15. An optical signal polarization modulator, comprising:
- a source (1) of a light radiation forming the optical signal to be modulated;
- means (2; 7) for sharing said radiation between the two branches of an interferometer;
- means (3; 3a, 3b) for amplitude modulating the radiation fractions which go along said branches, so that the ratio between the amplitudes of said fractions can have whatever value, depending on the value of a control signal which can have a plurality of different values and is emitted by a control signal generator (4), and optionally for giving a desired relative length to the optical paths in said two branches;
- polarization means (5; 12, 14) for imposing a first and a second state of polarization to the radiation fractions going along said branches, and
- means (6, 7) for recombining said radiation fractions having the first and the second state of polarization, respectively, and for emitting the modulated signal,
characterized in that the control signal generator (4) is connected to the source (1) and amplitude modulates the signal to be polarization modulated, and in that the means (3) for amplitude modulating the radiation fractions sent along the two branches comprise an amplitude modulator in only one of the interferometer branches, which amplitude modulator transmits or reflects the radiation fraction passing along said branch depending on the intensity of the fraction itself, the reflected radiation being sent into the second interferometer branch.

16. A polarization modulator as claimed in claim 15, characterized in that said amplitude modulator is a resonant cavity structure made of a non-linear medium, of which the non-linear refractive index is varied depending on the intensity of the radiation fraction sent thereto.

17. A polarization switching transmission system, comprising means for varying, within each bit interval of a digital information signal, the state of polarization of an optical carrier modulated by said digital information signal, characterized in that said means for varying the state of polarization comprise a polarization modulator as claimed in any preceding claim.

18. A polarization modulation transmission system, wherein a digital information signal modulates in a polarization modulator the state of polarization of an optical carrier so that each logic level of the digital signal corresponds to a different state of polarization, characterized in that the polarization modulator is a modulator as claimed in any one of claims 1 to 16.

19. A system for the determination of the optical characteristics of a sample, wherein an optical signal of which the state of polarization is made to change by a polarization modulator is sent to the sample, characterized in that the polarization modulator is a modulator as claimed in any one of claims 1 to 16.

## Patentansprüche

1. Polarisationsmodulator für ein optisches Signal, mit:
- einer Quelle (1) einer Lichtstrahlung, die das zu modulierende Signal darstellt;
- einer Einrichtung (2; 7) zum Teilen der Strahlung zwischen den beiden Zweigen eines Interferometers;
- einer Einrichtung (3; 3a, 3b) zum Amplitudenmodulieren der Strahlungsbruchteile, die entlang diesen Zweigen laufen, so daß das Verhältnis zwischen den Amplituden der Bruchteile jeden beliebigen Wert haben kann, und zwar in Abhängigkeit vom Wert eines Steuersignals, das eine Vielzahl unterschiedlicher Werte annehmen kann und von einem Steuersignalgenerator (4) abgegeben wird, und optional zum Einstellen einer gewünschten relativen Länge der optischen Wege in den beiden Zweigen;
- Polarisationseinrichtungen (5; 12, 14) zum Aufprägen eines ersten und eines zweiten Polarisationszustands auf die Strahlungsbruchteile, die entlang den Zweigen laufen; und
- Einrichtungen (6, 7) zum Rekombinieren der Strahlungsbruchteile, die den ersten bzw. zweiten Polarisationszustand aufweisen, und zum Abgeben des modulierten Signals;
dadurch gekennzeichnet, daß die Einrichtungen (3a, 3b) zum Amplitudenmodulieren der entlang den beiden Zweigen gesendeten Strahlungsbruchteile einen Amplitudenmodulator in jedem Interferometerzweig umfassen und daß der Steuersignalgenerator (4) mit diesen Amplitudenmodulatoren verbunden ist und jeden von ihnen mit einem Steuersignal beliefert, das eine Änderung des Transmissionsgrads oder des Reflexionsgrads des Modulators bewirkt.

2. Polarisationsmodulator nach Anspruch 1, dadurch gekennzeichnet, daß die Amplitudenmodulatoren Multi-Quantumwell-Strukturen aufweisen.

3. Polarisationsmodulator nach Anspruch 2, bei dem die das zu modulierende optische Signal bildende Strahlung zwischen den beiden Zweigen eines Michelson-Interferometers geteilt wird und ein moduliertes Ausgangssignal durch Rekombinieren der von reflektierenden Körpern, die sich an den Enden der beiden Zweige befinden, reflektierten Strahlungen erzeugt wird, dadurch gekennzeichnet, daß der Polarisationsmodulator folgende Teile umfaßt:
- zwei elektro-optische Amplitudenmodulatoren (3a, 3b) mit Multi-Quantumwell-Strukturen, die in jeweiligen asymmetrischen Resonatorhohlräumen angeordnet sind, wobei die Amplitudenmodulatoren die reflektierenden Körper bilden, zum Empfang des entlang dem jeweiligen Interferometerzweig verlaufenden Strahlungsbruchteils angeordnet sind und von einer Spannung vorbelastbar sind, die verschiedene Werte annehmen kann, jeweils mit der Folge eines unterschiedlichen Reflexionsgrads in den Amplitudenmodulatoren (3a, 3b);
- eine erste Polarisationseinrichtung (12) in einem der beiden Interferometerzweige zum Bewirken, daß der betreffende Strahlungsbruchteil am Amplitudenmodulator (3a) dieses Zweigs mit einer solchen Polarisation eintrifft, daß er einer vom Amplitudenmodulator (3a) reflektierten und durch die erste optische Polarisationseinrichtung (12) hindurchgetretenen Strahlung einen ersten linearen Polarisationszustand aufprägt;
- eine zweite Polarisationseinrichtung (14) im anderen Zweig des Interferometers zum Bewirken, daß der betreffende Strahlungsbruchteil am Amplitudenmodulator (3b) dieses Zweigs mit einer solchen Polarisation eintrifft, daß er einer vom Amplitudenmodulator (3b) reflektierten und durch die zweite Polarisationseinrichtung (14) hindurchgetretenen Strahlung einen zweiten linearen Polarisationszustand aufprägt;
- den Generator (4) der elektrischen Steuersignale für die Amplitudenmodulatoren (3a, 3b), der gemäß seiner Schaltung Signale erzeugt, die eine Mehrzahl unterschiedlicher logischer Pegel aufweisen, und mit den Amplitudenmodulatoren (3a, 3b) so verbunden ist, daß diese entsprechend den verschiedenen logischen Pegeln des Steuersignals durch solche Spannungen vorbelastet sind, daß das Ausgangssignal Komponenten unterschiedlicher Amplitude mit dem ersten bzw. zweiten Polarisationszustand aufweist.

4. Polarisationsmodulator nach Anspruch 3, dadurch gekennzeichnet, daß der erste Polarisationszustand der zum ersten Amplitudenmodulator (3a) gesendeten Strahlung aufgeprägt wird und in der reflektierten Strahlung aufrechterhalten wird.

5. Polarisationsmodulator nach Anspruch 3 oder 4, dadurch gekennzeichnet, daß die Steuersignale binäre Signale sind, deren beide logische Pegel einer ersten Spannung und einer zweiten Spannung zugeordnet sind, die den Reflexionsgrad 0 bzw. maximalen Reflexionsgrad im entsprechenden Amplitudenmodulator (3a, 3b) bewirken.

6. Polarisationsmodulator nach Anspruch 3 oder 4, dadurch gekennzeichnet, daß die Steuersignale Mehrpegelsignale sind, deren extreme logische Pegel einer ersten und einer zweiten Spannung zugeordnet sind, die den Reflexionsgrad 0 bzw. maximalen Reflexionsgrad im entsprechenden Amplitudenmodulator (3a, 3b) bewirken.

7. Polarisationsmodulator nach Anspruch 5 oder 6, dadurch gekennzeichnet, daß der Steuersignalgenerator (4) mit den Amplitudenmodulatoren (3a, 3b) so verbunden ist, daß dann, wenn die erste Spannung an einen der Amplitudenmodulatoren angelegt ist, die zweite Spannung an den anderen angelegt ist, so daß in Übereinstimmung mit den beiden logischen Pegeln oder den beiden extremen logischen Pegeln des elektrischen Signals das Polarisationsmodulator-Ausgangssignal durch die von nur einem der beiden Amplitudenmodulatoren (3a, 3b) reflektierten Strahlung gebildet wird und den ersten bzw. den zweiten Polarisationszustand wiedergibt.

8. Polarisationsmodulator nach Anspruch 2, bei dem die das zu modulierende optische Signal bildende Strahlung zwischen den beiden Zweigen eines Mach-Zehnder-Interferometers geteilt wird, dadurch gekennzeichnet, daß der Polarisationsmodulator folgende Teile umfaßt:
- zwei elektro-optische Amplitudenmodulatoren (3a, 3b) mit Multi-Quantumwell-Strukturen, die in jeweiligen asymmetrischen Resonatorhohlräumen angeordnet sind, zum Empfang des entlang dem jeweiligen Interferometerzweig verlaufenden Strahlungsbruchteils angeordnet sind und von einer Spannung vorbelastbar sind, die verschiedene Werte annehmen kann, jeweils mit der Folge eines unterschiedlichen Transmissionsgrads in den Amplitudenmodulatoren (3a, 3b);
- eine erste Polarisationseinrichtung (5) in einem der beiden Interferometerzweige zum Bewirken, daß der betreffende Strahlungsbruchteil an der rekombinierenden Einrichtung mit einem ersten linearen Polarisationszustand eintrifft;
- eine zweite Polarisationseinrichtung, die sich im anderen Zweig des Interferometers befindet, sofern die rekombinierende Einrichtung ein polarisierender Strahlspalter ist, zum Bewirken, daß der betreffende Strahlungsbruchteil an der rekombinierenden Einrichtung mit einem zweiten linearen Polarisationszustand eintrifft;
- den Generator (4) der elektrischen Steuersignale für die Amplitudenmodulatoren (3a, 3b), der gemäß seiner Schaltung Signale erzeugt, die eine Mehrzahl unterschiedlicher logischer Pegel aufweisen, und mit den Amplitudenmodulatoren (3a, 3b) so verbunden ist, daß diese entsprechend den verschiedenen logischen Pegeln des Steuersignals durch solche Spannungen vorbelastet sind, daß das Ausgangssignal Komponenten unterschiedlicher Amplitude mit dem ersten bzw. zweiten Polarisationszustand aufweist.

9. Polarisationsmodulator nach Anspruch 8, dadurch gekennzeichnet, daß die Steuersignale binäre Signale sind, deren beide logische Pegel einer ersten Spannung und einer zweiten Spannung zugeordnet sind, die einen minimalen bzw. einen maximalen Transmissionsgrad im entsprechenden Amplitudenmodulator (3a, 3b) bewirken.

10. Polarisationsmodulator nach Anspruch 8, dadurch gekennzeichnet, daß die Steuersignale Mehrpegelsignale sind, deren extreme logische Pegel einer ersten und einer zweiten Spannung zugeordnet sind, die einen minimalen bzw. einen maximalen Transmissionsgrad im entsprechenden Amplitudenmodulator (3a, 3b) bewirken.

11. Polarisationsmodulator nach einem der vorhergehenden Ansprüche, dadurch gekennzeichnet, daß der erste Polarisationszustand und der zweite Polarisationszustand zueinander orthogonal sind.

12. Polarisationsmodulator nach einem der vorhergehenden Ansprüche, dadurch gekennzeichnet, daß die zum ersten und zum zweiten Amplitudenmodulator (3a, 3b) gesendeten optischen Signale gleichen optischen Wegen folgen, so daß die Ausgangssignale linear polarisierte Signale sind.

13. Polarisationsmodulator nach einem der Ansprüche 1 bis 11, dadurch gekennzeichnet, daß die zum ersten und zum zweiten Amplitudenmodulator (3a, 3b) gesendeten Signale verschiedenen optischen Wegen folgen, so daß die Ausgangssignale elliptisch polarisierte Signale sind.

14. Polarisationsmodulator nach einem der vorhergehenden Ansprüche, dadurch gekennzeichnet, daß er im Weg des Ausgangssignals zur Orientierung von dessen Polarisation eine Halbwellenplatte (14) aufweist.

15. Polarisationsmodulator für ein optisches Signal, mit:
- einer Quelle (1) einer Lichtstrahlung, die das zu modulierende optische Signal darstellt;
- einer Einrichtung (2; 7) zum Teilen der Strahlung zwischen den beiden Zweigen eines Interferometers;
- einer Einrichtungen (3; 3a, 3b) zum Amplitudenmodulieren der Strahlungsbruchteile, die entlang diesen Zweigen laufen, so daß das Verhältnis zwischen den Amplituden der Bruchteile jeden beliebigen Wert haben kann, und zwar in Abhängigkeit vom Wert eines Steuersignals, das eine Vielzahl unterschiedlicher Werte annehmen kann und von einem Steuersignalgenerator (4) abgegeben wird, und optional zum Einstellen einer gewünschten relativen Länge der optischen Wege in den beiden Zweigen;
- Polarisationseinrichtungen (5; 12, 14) zum Aufprägen eines ersten und eines zweiten Polarisationszustands auf die Strahlungsbruchteile, die entlang den Zweigen laufen; und
- Einrichtungen (6, 7) zum Rekombinieren der Strahlungsbruchteile, die den ersten bzw. zweiten Polarisationszustand aufweisen, und zum Abgeben des modulierten Signals;
dadurch gekennzeichnet, daß der Steuersignalgenerator (4) mit der Quelle (1) verbunden ist und das zu polarisationsmodulierende Signal amplitudenmoduliert, und daß die Einrichtungen (3) zum Amplitudenmodulieren der entlang den beiden Zweigen gesendeten Strahlungsbruchteile in nur einem der Interferometerzweige einen Amplitudenmodulator umfassen, der den durch diesen Zweig verlaufenden Strah-lungsbruchteil in Abhängigkeit von der Strahlungsstärke dieses Bruchteils durchläßt oder reflektiert, und daß die reflektierte Strahlung in den zweiten Interferometer-Zweig gesendet wird.

16. Polarisationsmodulator nach Anspruch 15, dadurch gekennzeichnet, daß der Amplitudenmodulator eine Hohlraumresonator-Struktur aus einem nicht-linearen Medium ist, dessen nicht-linearer Brechungsindex sich in Abhängigkeit von der Strahlungsstärke des zu ihm gesendeten Strahlungsbruchteils ändert.

17. Polarisationsschalt-Übertragungssystem, mit Einrichtungen zum Ändern des Polarisationszustands eines durch ein digitales Informationssignal modulierten optischen Trägers innerhalb jedes Bitintervalls des digitalen Informationssignals, dadurch gekennzeichnet, daß die Einrichtungen zum Verändern des Polarisationszustands einen Polarisationsmodulator nach einem der vorhergehenden Ansprüche umfassen.

18. Polarisations-Modulations-Übertragungssystem, bei dem ein digitales Informationssignal in einem Polarisationsmodulator den Polarisationszustand eines optischen Trägers so moduliert, daß jeder logische Pegel des digitalen Signals einem unterschiedlichen Polarisationszustand entspricht, dadurch gekennzeichnet, daß der Polarisationsmodulator ein Modulator nach einem der Ansprüche 1 bis 16 ist.

19. System zur Bestimmung der optischen Charakteristiken eines Probestücks, bei dem ein optisches Signal, dessen Polarisationszustand mit Hilfe eines Polarisationsmodulators zum Verändern gebracht wird, zum Probestück gesendet wird, dadurch gekennzeichnet, daß der Polarisationsmodulator ein Modulator nach einem der Ansprüche 1 bis 16 ist.

## Revendications

1. Modulateur de la polarisation d'un signal optique, comportant:
- une source (1) d'un rayonnement lumineux constituant le signal à moduler;
- des moyens (2; 7) pour partager ce rayonnement entre les deux branches d'un interféromètre;
- des moyens (3; 3a, 3b) pour moduler en amplitude les fractions de rayonnement qui parcourent ces branches, de telle façon que le rapport entre les amplitudes de ces fractions puisse avoir n'importe quelle valeur, suivant la valeur d'un signal de commande qui peut avoir plusieurs valeurs différentes et qui est émis par un générateur (4) de signaux de commande, et optionnellement pour donner une longueur relative désirée aux chemins optiques dans les deux branches;
- des moyens de polarisation (5; 12, 14) pour imposer un premier et un second état de polarisation aux fractions de rayonnement qui parcourent ces branches, et
- des moyens (6; 7) pour recombiner les fractions de rayonnement ayant respectivement le premier et le second état de polarisation et pour émettre le signal modulé,
caractérisé en ce que les moyens (3a, 3b) pour moduler en amplitude les fractions de rayonnement envoyées le long des deux branches comportent un modulateur d'amplitude en chaque branche de l'interféromètre, et en ce que le générateur (4) de signaux de commande est connecté à ces modulateurs d'amplitude et envoie à chacun d'eux un signal de commande faisant varier la transmittivité ou la réflectivité du modulateur d'amplitude.

2. Modulateur de polarisation selon la revendication 1, caractérisé en ce que les modulateurs d'amplitude comprennent des structures à multipuits quantiques.

3. Modulateur de polarisation selon la revendication 2, dans lequel on partage le rayonnement constituant le signal optique à moduler entre les deux branches d'un interféromètre de Michelson et on engendre un signal de sortie modulé en recombinant des rayonnements réfléchis par des corps réfléchissants placés à l'extrémité des deux branches, caractérisé en ce que le modulateur de polarisation comporte:
- deux modulateurs d'amplitude électro-optiques (3a, 3b), comportant des structures à multipuits quantiques placées en des cavités résonnantes asymétriques respectives, ces modulateurs d'amplitude constituant les corps réfléchissants aptes à recevoir la fraction de rayonnement qui parcourt la branche respective de l'interféromètre et pouvant être polarisés par une tension qui peut avoir des valeurs différentes dont chacune donne lieu à une valeur de réflectivité différente dans les modulateurs d'amplitude (3a, 3b);
- des premiers moyens de polarisation (12) dans une des deux branches de l'interféromètre, pour faire arriver au modulateur d'amplitude (3a) de cette branche la fraction de rayonnement respective avec une polarisation telle à imposer un premier état de polarisation rectiligne à un rayonnement qui est réfléchi par le modulateur d'amplitude (3a) et qui est passé à travers les premiers moyens de polarisation optique (12);
- des seconds moyens de polarisation (14) dans l'autre branche de l'interféromètre, pour faire arriver au modulateur d'amplitude (3b) de cette branche la fraction de rayonnement respective avec une polarisation telle à imposer un second état de polarisation rectiligne à un rayonnement qui est réfléchi par le modulateur d'amplitude (3b) et qui est passé à travers les seconds moyens de polarisation (14);
- le générateur (4) des signaux électriques de commande pour les modulateurs d'amplitude (3a, 3b), qui est apte à engendrer des signaux ayant plusieurs niveaux logiques différents et qui est connecté aux modulateurs d'amplitude (3a, 3b) de telle façon che ceux-ci, en correspondance avec les divers niveaux logiques du signal de commande, soient polarisés par des tensions telles que le signal de sortie comporte des composantes d'amplitude différente respectivement avec le premier et le second état de polarisation.

4. Modulateur de polarisation selon la revendication 3, caractérisé en ce que le premier état de polarisation est imposé au rayonnement envoyé vers le premier modulateur d'amplitude (3a) et est gardé dans le rayonnement réfléchi.

5. Modulateur de polarisation selon les revendications 3 ou 4, caractérisé en ce que les signaux de commande sont des signaux binaires, dont les deux niveaux logiques sont associés à une première et une seconde tension qui donnent lieu à réflectivité respectivement nulle et maximum dans le modulateur d'amplitude (3a, 3b) correspondant.

6. Modulateur de polarisation selon les revendications 3 ou 4, caractérisé en ce que les signaux de commande sont des signaux multiniveaux, dont les niveaux logiques extrêmes sont associés à une première et une seconde tension qui donnent lieu à réflectivité respectivement nulle et maximum dans le modulateur d'amplitude (3a, 3b) correspondant.

7. Modulateur de polarisation selon les revendications 5 ou 6, caractérisé en ce que le générateur (4) de signaux de commande est connecté aux modulateurs d'amplitude (3a, 3b) de telle façon que, lorsque la première tension est appliquée à un des modulateurs d'amplitude, la seconde tension est appliquée à l'autre, de sorte qu'en correspondance avec les deux niveaux logiques ou les deux niveaux logiques extrêmes du signal électrique le signal de sortie du modulateur de polarisation est formé par le rayonnement réfléchi par un seul des deux modulateurs d'amplitude (3a, 3b) et présente respectivement le premier ou le second état de polarisation.

8. Modulateur de polarisation selon la revendication 2, dans lequel on partage la rayonnement constituant le signal optique à moduler entre les deux branches d'un interféromètre de Mach-Zehnder, caractérisé en ce que le modulateur de polarisation comporte:
- deux modulateurs d'amplitude électro-optiques (3a, 3b), comportant des structures à multipuits quantiques introduites en des cavités résonnantes asymétriques respectives, ces modulateurs d'amplitude étant aptes à recevoir la fraction de rayonnement qui parcourt la branche respective de l'interféromètre et pouvant être polarisés par une tension qui peut avoir des valeurs différentes dont chacune donne lieu à une valeur de transmittivité différente dans les modulateurs d'amplitude (3a, 3b);
- des premiers moyens de polarisation (5) dans une des branches de l'interféromètre, pour faire arriver aux moyens de recombinaison la fraction de rayonnement respective avec un premier état de polarisation rectiligne;
- des seconds moyens de polarisation qui sont dans l'autre branche de l'interféromètre si les moyens de recombinaison sont constitués par un diviseur de faisceau polarisant, de façon à faire arriver au moyens de recombinaison la fraction de rayonnement respective avec un second état de polarisation rectiligne;
- le générateur (4) des signaux électriques de commande pour les modulateurs d'amplitude (3a, 3b), qui est apte à engendrer des signaux ayant plusieurs niveaux logiques différents et qui est connecté aux modulateurs d'amplitude (3a, 3b) de telle façon que ceux-ci, en correspondance avec les divers niveaux logiques du signal de commande, soient polarisés par des tensions telles que le signal de sortie comporte des composantes d'amplitude différente respectivement avec le premier et le second état de polarisation.

9. Modulateur de polarisation selon la revendication 8, caractérisé en ce que les signaux de commande sont des signaux binaires, dont les deux niveaux logiques sont associés à une première et une seconde tension qui donnent lieu à transmittivité respectivement minimum et maximum dans le modulateur d'amplitude (3a, 3b) correspondant.

10. Modulateur de polarisation selon la revendication 8, caractérisé en ce que les signaux de commande sont des signaux multiniveaux, dont les niveaux logiques extrêmes sont associés à une première et une seconde tension qui donnent lieu à transmittivité respectivement minimum et maximum dans le modulateur d'amplitude (3a, 3b) correspondant.

11. Modulateur de polarisation selon l'une quelconque des revendications qui précèdent, caractérisé en ce que le premier et le second état de polarisation sont orthogonaux.

12. Modulateur de polarisation selon l'une quelconque des revendications qui précèdent, caractérisé en ce que les signaux optiques envoyés aux premier et second modulateur d'amplitude (3a, 3b) suivent des chemins optiques égaux, de sorte que les signaux de sortie sont des signaux polarisés rectilignement.

13. Modulateur de polarisation selon l'une quelconque des revendications 1 à 11, caractérisé en ce que les signaux envoyés au premier et second modulateur d'amplitude (3a, 3b) suivent des chemins optiques différents, de sorte que les signaux de sortie sont des signaux polarisés elliptiquement.

14. Modulateur de polarisation selon l'une quelconque des revendications qui précédent, caractérisé en ce qu'il comporte en outre une lame demi-onde (14) sur le parcours du signal de sortie pour en orienter la polarisation.

15. Modulateur de la polarisation d'un signal optique, comportant:
- une source (1) d'un rayonnement lumineux constituant le signal optique à moduler;
- des moyens (2; 7) pour partager ce rayonnement entre les deux branches d'un interféromètre;
- des moyens (3; 3a, 3b) pour moduler en amplitude les fractions de rayonnement qui parcourent ces branches, de telle façon que le rapport entre les amplitudes de ces fractions puisse avoir n'importe quelle valeur, suivant la valeur d'un signal de commande qui peut avoir plusieurs valeurs différentes et qui est émis par un générateur (4) de signaux de commande, et optionnellement pour donner une longueur relative désirée aux chemins optiques dans les deux branches;
- des moyens de polarisation (5; 12, 14) pour imposer un premier et un second état de polarisation aux fractions de rayonnement qui parcourent ces branches, et
- des moyens (6; 7) pour recombiner les fractions de rayonnement ayant respectivement le premier et le second état de polarisation et pour émettre le signal modulé,
caractérisé en ce que le générateur (4) de signaux de commande est connecté à la source (1) et module en amplitude le signal à moduler en polarisation, et en ce que les moyens (3) pour moduler en amplitude les fractions de rayonnement envoyées le long des deux branches comprennent un modulateur d'amplitude dans une seule des branches de l'interféromètre, ce modulateur d'amplitude transmettant ou réfléchissant la fraction de rayonnement qui parcourt cette branche suivant l'intensité de cette fraction, le rayonnement réfléchi étant envoyé dans la seconde branche de l'interféromètre.

16. Modulateur de polarisation selon la revendication 15, caractérisé en ce que le modulateur d'amplitude est une structure à cavité résonnante réalisée en un matériau non linéaire, dont on fait varier l'indice de réfraction non linéaire suivant l'intensité de la fraction de rayonnement qui lui est envoyée.

17. Système de transmission à commutation de polarisation, comportant des moyens pour faire varier, à l'intérieur de chaque intervalle de chiffre d'un signal numérique d'information, I'état de polarisation d'une porteuse optique modulée par le signal numérique d'information, caractérisé en ce que les moyens pour varier l'état de polarisation comprennent un modulateur de polarisation selon l'une quelconque des revendications qui précédent.

18. Système de transmission à modulation de polarisation, dans lequel un signal numérique d'information module dans un modulateur de polarisation l'état de polarisation d'une porteuse optique de façon que chaque niveau logique du signal numérique corresponde à un état de polarisation différent, caractérisé en ce que le modulateur de polarisation est un modulateur selon l'une quelconque des revendications 1 à 16.

19. Système pour la détermination des caractéristiques optiques d'un échantillon, dans lequel on envoie dans l'échantillon un signal optique dont l'état de polarisation est fait varier par un modulateur de polarisation, caractérisé en ce que le modulateur de polarisation est un modulateur selon l'une quelconque des revendications 1 à 16.
